# EUROPÄISCHE PATENTSCHRIFT

(11) **EP 2 347 549 B1**
(45) Veröffentlichungstag und Bekanntmachung des Hinweises auf die Patenterteilung: **12.11.2014**
(21) Anmeldenummer: 09783397.4
(22) Anmeldetag: 25.09.2009
(51) Int. Cl.: H04L 12/12, H04L 12/40

(54) **SCHALTUNGSANORDNUNG MIT EINER TRANSCEIVERSCHALTUNG FÜR EIN BUSSYSTEM UND KNOTEN FÜR EIN BUSSYSTEM**
CIRCUIT ARRANGEMENT HAVING A TRANSCEIVER CIRCUIT FOR A BUS SYSTEM AND NODE FOR A BUS SYSTEM
CIRCUITERIE COMPRENANT UN CIRCUIT ÉMETTEUR-RÉCEPTEUR POUR UN SYSTÈME DE BUS ET NOEUD POUR UN SYSTÈME DE BUS

(30) Priorität: 10.11.2008 DE 102008057613
(43) Veröffentlichungstag der Anmeldung: 27.07.2011
(73) Patentinhaber: Robert Bosch GmbH, 70442 Stuttgart (DE)
(72) Erfinder: NEUSCHELER, Marco, 72768 Reutlingen (DE); REGER, Christian, 83083 Riedering (DE); ERCKERT, Ricardo, 83043 Bad Aibling (DE); WENZLER, Axel, 78628 Rottweil (DE)
(86) Internationale Anmeldenummer: PCT/EP2009/062416
(87) Internationale Veröffentlichungsnummer: WO 2010/052064

(56) Entgegenhaltungen:
- WO-A2-2007/098411
- US-A- 6 037 675
- US-A1- 2007 230 484
- US-B1- 6 438 462
- US-B1- 6 519 720

## Beschreibung

### Stand der Technik

Die Erfindung betrifft eine Schaltungsanordnung mit den Merkmalen des Oberbegriffs des Anspruchs 1 und einen Knoten mit den Merkmalen des Oberbegriffs des Anspruchs 8.

Eine derartige Schaltungsanordnung sowie ein derartiger Knoten sind aus der US 6,519,720 B1 bekannt. Dabei wird ein Wake-Up Receiver direkt von der Batteriespannung versorgt. In einem Ruhezustand ist ein Microcontroller des Knotens ohne Spannungsversorgung. Dadurch dauert der Übergang aus dem Ruhezustand in einen Betriebszustand relativ lange.

Steuergeräte, Sensorik und Aktuatorik insbesondere eines Kraftfahrzeugs oder Nutzfahrzeugs sind oftmals mit Hilfe eines Kommunikationssystems, wie das unter der Bezeichnung "FlexRay" bekannte Bussystem, miteinander verbunden. Der Kommunikationsverkehr auf dem Bussystem, Zugriffs- und Empfangsmechanismen, sowie Fehlerbehandlung werden über ein Protokoll geregelt. Bei FlexRay handelt es sich um ein schnelles, deterministisches und fehlertolerantes Bussystem, insbesondere für den Einsatz in Kraftfahrzeugen. Das FlexRay-Protokoll arbeitet nach dem Prinzip des Time Division Multiple Access (TDMA), wobei den Teilnehmern bzw. den zu übertragenden Botschaften feste Zeitschlitze zugewiesen werden, in denen sie einen exklusiven Zugriff auf die Kommunikationsverbindung haben. Die Zeitschlitze wiederholen sich dabei in einem festgelegten Zyklus, so dass der Zeitpunkt, zu dem eine Botschaft über den Bus übertragen wird, exakt vorausgesagt werden kann und der Buszugriff deterministisch erfolgt.

Um die Bandbreite für die Übertragung von Botschaften auf dem Bussystem optimal zu nutzen, unterteilt FlexRay den Zyklus in einen statischen und einen dynamischen Teil. Die festen Zeitschlitze befinden sich dabei im statischen Teil am Anfang eines Buszyklusses. Im dynamischen Teil werden die Zeitschlitze dynamisch vorgegeben. Darin wird nun der exklusive Buszugriff jeweils nur für eine kurze Zeit, für die Dauer mindestens eines sogenannten Minislots, ermöglicht. Nur wenn innerhalb eines Minislots ein Buszugriff erfolgt, wird der Zeitschlitz um die benötigte Zeit verlängert. Damit wird Bandbreite also nur verbraucht, wenn sie auch tatsächlich benötigt wird. Dabei kommuniziert FlexRay über eine oder zwei physikalisch getrennte Leitungen mit einer Datenrate von jeweils maximal 10 Mbit/sec. FlexRay kann auch mit niedrigeren Datenraten betrieben werden. Mittels der Leitungen realisierte Kanäle entsprechen dabei der Bitübertragungsschicht, insbesondere des sogenannten OSI (Open System Architecture) Schichtenmodells. Die Verwendung zweier Kanäle dient hauptsächlich der redundanten und damit fehlertoleranten Übertragung von Botschaften, es können jedoch auch unterschiedliche Botschaften übertragen, wodurch sich dann die Datenrate verdoppeln würde. Üblicherweise werden die Botschaften mit Hilfe eines differentiellen Signals übertragen, das heißt das über die Verbindungsleitungen übertragene Signal ergibt sich aus der Differenz von über die beiden Leitungen übertragenen Einzelsignalen. Die im Schichtenmodell über der Bitübertragungsschicht liegende Schicht ist derart ausgestaltet, dass eine elektrische oder ein optische Übertragung des oder der Signale über die Leitung(en) oder eine Übertragung auf anderem Wege möglich ist.

Insbesondere bei der Anwendung eines solchen Bussystems in einem Fahrzeug, muss darauf geachtet werden, dass die Knoten des Bussystems wenig Energie verbrauchen, wenn sie gerade nicht benötigt werden; dies kann beispielsweise der Fall sein, wenn von den Koten auszuführende Funktionen nicht aktiv sind oder wenn das Fahrzeug nicht in Betrieb ist. Deshalb weisen die Knoten einen Ruhezustand auf, bei dem einige Teile des Knotens abgeschaltet sind. Bei einem Wechsel von dem Ruhezustand in einen Betriebszustand muss der Mikrocontroller vollständig neu gestartet werden, wofür relativ viel Zeit benötigt wird. Dies führt zu einer erheblichen Verzögerung beim Verlassen des Ruhezustands. Die im Ruhezustand befindlichen Knoten des Bussystems können auf ein bestimmtes Ereignis somit nur mit einer relativ langen Reaktionszeit reagieren.

### Offenbarung der Erfindung

Aufgabe der Erfindung ist es, eine Schaltungsanordnung für einen Knoten mit einer Transceiverschaltung für ein Bussystem anzugeben, bei der ein Wechsel von einem Ruhezustand in einen Betriebszustand in möglichst kurzer Zeit möglich ist.

Zur Lösung dieser Aufgabe wird eine Schaltungsanordnung mit den Merkmalen des Anspruch 1 sowie ein Knoten mit den Merkmalen des Anspruchs 8 vorgeschlagen. Weitere vorteilhafte Weiterbildungen der Erfindung ergeben sich aus den Unteransprüchen.

Erfindungsgemäß wird erreicht, dass die Steuerschaltung bzw. der Mikrocontroller im Ruhezustand wegen des Deaktivierens des Spannungsreglers nicht vollständig abgeschaltet werden muss sondern, versorgt durch die Spannungsversorgungseinrichtung der Transceiverschaltung, in einen Zustand mit geringer Leistungsaufnahme verbleiben kann. Bei einem Wechsel von dem Ruhezustand zurück in den Betriebszustand ist deshalb ein vollständiger, zeitaufwändiger Neustart der Steuereinrichtung nicht erforderlich. Hierdurch wird eine besonders geringe Verzögerung bei dem Wechsel von dem Ruhezustand in den Betriebszustand erreicht.

Wird die Schaltungsanordnung mit dem im Anspruch 4 vorgeschlagenen Schaltelement realisiert, dann kann die Leistungsaufnahme der Schaltung weiter reduziert werden. Denn durch das Schaltelement wird ein Stromrückfluss von der Spannungsversorgungseinrichtung zum deaktivierten Spannungsregler zumindest weitgehend vermieden.

Die neue Lösung mit integriertem Spannungsversorgungseinrichtung (Low-Power-Regler) und Schalter zwischen Pin VBUF und Pin VCC ermöglicht ein schnelleres Wecken (Wechsel von dem Ruhezustand in den Betriebszustand) des Systems und vermeidet den Stromfluss in den Pin Vout des externen Spannungsreglrs.

Die Spannungsversorgungseinrichtung kann als ein in die Transceiverschaltung integrierter Low-Power-Regler ausgebildet sein, der auf einen niedrigen Stromverbrauch (langsam, ungenau) optimiert sein kann. Im aktiven Betrieb können die besseren (schnelleren, genaueren) Regeleigenschaften des externen Reglers genutzt werden. Die Wärmeabfuhr des Systems im aktiven Betrieb verteilt sich auf zwei ICs (externer Spannungsregler und Flexray-Transceiver). Dadurch ist ein Betrieb bei höheren Umgebungstemperaturen möglich als bei Integration des Power Reglers in den Flexray-Transceiver.

Weitere Merkmale und Vorteile der Erfindung ergeben sich aus der nachfolgenden Beschreibung, in welcher exemplarische Ausführungsformen anhand der Zeichnung näher erläutert werden. Dabei zeigen:
Figur 1 ein Bussystem mit mehreren Knoten gemäß einer bevorzugten Ausführungsform; und
Figur 2 eine Schaltungsanordnung eines Knotens aus Figur 1.

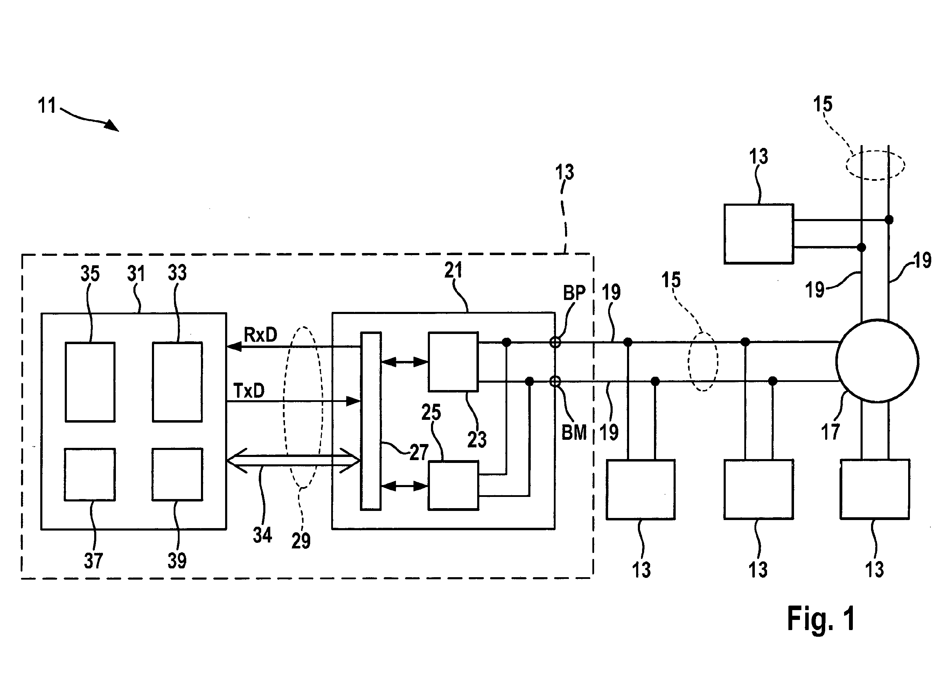

Figur 1 zeigt ein Bussystem 11, an das mehrere Knoten 13 angeschlossen sind. Bei dem Bussystem 11 kann es sich um ein FlexRay-Kommunikationssystem handeln, und somit kann das Bussystem 11 gemäß den Spezifikationen des FlexRay-Konsortiums aufgebaut sein.

Die einzelnen Knoten 13 sind über Busleitungen 15 entweder direkt oder indirekt über einen Sternkoppler 17 miteinander verbunden. Jede Busleitung 15 ist als Kabel mit mindestens einem Adernpaar bestehend aus zwei Adern 19, die jeweils einen elektrischen Leiter bilden, ausgebildet. Das Bussystem 11 weist somit einen Kanal zum Übertragen von Daten auf, der durch die Adern 19 des Adernpaars gebildet wird. In einer nicht gezeigten Ausführungsform kann das Bussystem 11 mehrere Kanäle, vorzugsweise zwei Kanäle, aufweisen, welche durch zwei voneinander getrennte Adernpaare ausgeführt sind (nicht gezeigt). Durch die Verwendung von zwei Kanälen kann die Nutzdatenrate von Datenübertragungen zwischen den Knoten 13 durch Übertragung unterschiedlicher Daten über die beiden Kanäle erhöht werden. Da das Bussystem bei einem Defekt an einem der beiden Adernpaare weiterarbeiten kann, ergibt sich eine höhere Ausfallsicherheit des Bussystems 11.

Jeder Knoten 13 weist eine Transceiverschaltung 21, die vorzugsweise als eine integrierte Schaltung ausgebildet ist, auf. Ein erster Busanschluss BP und ein zweiter Busanschluss BM der Transceiverschaltung 21 sind jeweils mit einer der Adern 19 einer der Busleitungen 15 verbunden.

Die Transceiverschaltung 21 weist eine Empfängerschaltung 23 zum Empfangen von Daten über die Busleitung 15 sowie eine Senderschaltung 25 zum Senden von Daten über diejenige Busleitung 15, an die der Knoten 13 angeschlossen ist, auf. Sowohl die Empfängerschaltung 23 als auch die Senderschaltung 25 sind innerhalb der Transceiverschaltung 21 mit den beiden Busanschlüssen BP und BM verbunden. Sowohl die Empfängerschaltung 23 als auch die Senderschaltung 25 sind zum Übertragen eines differentiellen digitalen Signals über das Adernpaar der an die entsprechende Transceiverschaltung 21 angeschlossenen Busleitung 15 eingerichtet.

Die Transceiverschaltung 21 weist außerdem eine Logikeinheit 27 auf, die mit der Empfängerschaltung 23 und mit der Senderschaltung 25 gekoppelt ist. Die Logikeinheit 27 weist Anschlüsse zum Anschließen der Transceiverschaltung 21 an eine beispielsweise von einem Mikrocontroller 31 oder einen Mikrocomputer gebildeten Steuerschaltung auf. Diese Anschlüsse bzw. daran angeschlossene Leitungen bilden eine Schnittstelle 29 zwischen der Transceiverschaltung 21 und der Steuerschaltung bzw. dem Mikrocontroller 31.

Der Mikrocontroller 31 weist einen Kommunikationscontroller 33 zum Steuern von Kommunikationsvorgängen zwischen den Knoten 13 über die Busleitung 15 auf. Der Kommunikationscontroller 33 ist zum Steuern der Kommunikationsvorgänge gemäß den Protokollen des Bussystems 11, insbesondere zum Ausführen von Medienzugriffsverfahren des Bussystems 11 eingerichtet. Der Kommunikationscontroller 33 kann außerdem zum Berechnen von Prüfsummen von über die Busleitung 15 zu übertragenen Datenrahmen beispielsweise nach dem CRC-Verfahren und/oder zum Überprüfen der Prüfsummen der empfangenen Datenrahmen eingerichtet sein.

Als Schnittstellenleitungen sind insbesondere eine Leitung RxD zum Übertragen von Daten, die die Transceiverschaltung 21 über die Busleitung 15 empfangen hat, von der Transceiverschaltung 21 zu dem Kommunikationscontroller 33 sowie eine Leitung TxD zum Übertragen von Daten, die die Transceiverschaltung 21 über die Busleitung 15 senden soll, von dem Kommunikationscontroller 33 zu der Transceiverschaltung 21 vorgesehen. Die Schnittstelle 29 umfasst außer den beiden Leitungen RxD und TXD auch weitere Leitungen 34, die beispielsweise dem Austausch von Steuerinformationen zwischen dem Kommunikationscontroller 33 und der Transceiverschaltung 21 dienen.

Der Mikrocontroller 31 weist einen Rechenkern 35, Speicher 37 (Arbeitsspeicher und/oder Festwertspeicher) sowie Ein- und Ausgabeeinrichtüngen 39 auf. Der Mikrocontroller 31 kann zum Ausführen von weiterer Protokollsoftware und/oder von Anwendungsprogrammen eingerichtet sein.

In der gezeigten Ausführungsform ist der Kommunikationscontroller 33 in den Mikrocontroller 31 integriert. Abweichend hiervon ist in einer nicht gezeigten Ausführungsform der Kommunikationscontroller 33 als eine von dem Mikrocontroller 31 getrennte Schaltung, vorzugsweise als eine integrierte Schaltung, ausgebildet.

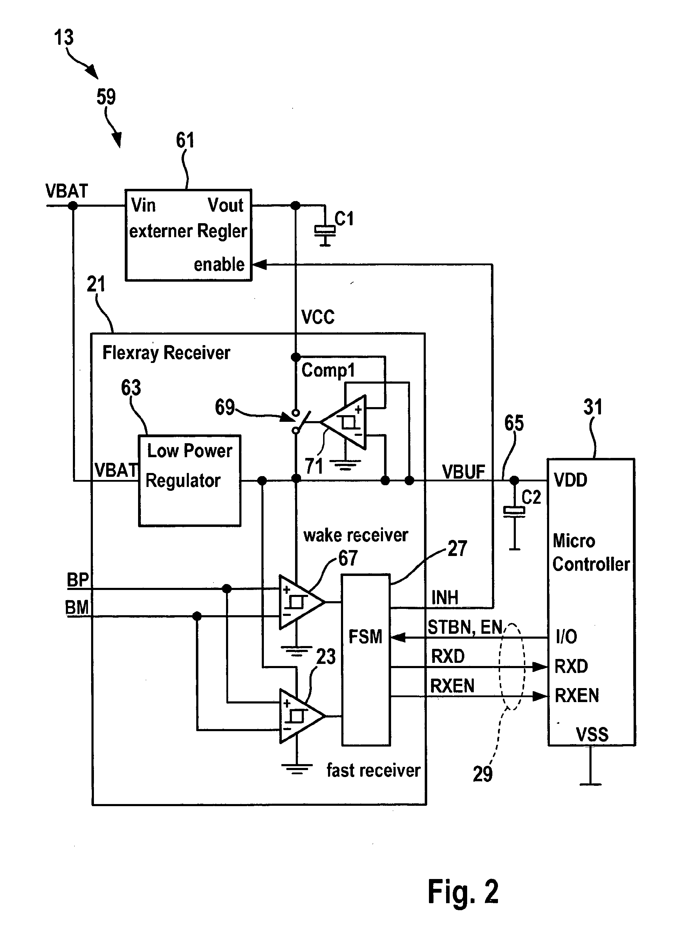

Figur 2 zeigt eine detaillierte Ansicht einer Schaltungsanordnung 59, die einen Teil eines der Knoten 13 bildet, einschließlich eines Ausschnitts aus der Transceiverschaltung 21. Man erkennt, dass der Knoten 13 einen bezüglich der Transceiverschaltung 21 externen Spannungsregler 61 zum Erzeugen einer Versorgungsspannung VCC aufweist. Ein Eingang Vin des Spannungsreglers 61 ist mit einem Batteriespannungsanschluss VBAT des Knotens 13 verbunden.

Die Transceiverschaltung 21 weist eine Spannungsversorgungseinrichtung 63 mit einem Eingang, der ebenfalls an den Batteriespannungsanschluss VBAT angeschlossen ist, auf. Ein Ausgang der Spannungsversorgungseinrichtung 63 ist mit einer Versorgungsleitung 65 verbunden. An die Versorgungsleitung 65 sind zumindest einige Teile der Transceiverschaltung 21, insbesondere eine Empfangseinrichtung 67 der Transceiverschaltung 21, sowie ein Versorgungsspannungsanschluss VDD des Mikrocontrollers 31 angeschlossen. Die Empfangseinrichtung 67 bildet einen Weckempfänger 67 zum Überwachen der Busleitung 15 auf Signale, Zustände oder Zustandsfolgen, die einen Wechsel des Knotens 13 von einem Ruhezustand in einen Betriebszustand erforderlich machen. Zudem ist zwischen der Versorgungsleitung 65 und Masse ein Pufferkondensator C2 angeordnet.

Zwischen einem Ausgang Vout des Spannungsregler 61 und der Spannungsversorgungseinrichtung 63 ist ein Halbleiterschaltelement 69, das beispielsweise als ein Transistor ausgebildet sein kann, angeordnet. Ein Steuereingang des Halbleiterschaltelements 69 ist mit einem Ausgang eines als ein Komparator comp1 ausgebildeten Ansteuerelements 71 angeschlossen. Ferner ist der Ausgang Vout des Spannungsreglers 61 an einen Kondensator C1 angeschlossen, der außerdem mit Masse verbunden ist.

Der Spannungsregler 61 ist als ein steuerbarer Spannungsregler 61 ausgebildet. Er weist einen Steuereingang "enable" auf, der mit einem Steuerausgang INH der Logikeinheit 27 verbunden ist, sodass die Logikeinheit 27 den Spannungsregler 61 aktivieren und deaktivieren kann.

Im Folgenden wird unter Bezugnahme auf die Figur 2 die Funktionsweise der dort gezeigten Schaltungsanordnung 59 näher erläutert.

Die Schaltungsanordnung 59 nutzt die Spannungsversorgungseinrichtung 63, die als ein in die Transceiverschaltung 21 integrierter Low-Power-Regler 63 realisiert ist, der dafür ausgelegt ist, den Weckempfänger 67 mit wenigen µA zu versorgen und den Pufferkondensator C2 zu laden. Der Pufferkondensator C2 kann kurzzeitig (für einige ms) die Empfangsschaltung 23 und den Mikrocontroller 31 versorgen.

Vor dem Wecken, das heißt im Ruhezustand, sind nur der Low-Power-Regler 63 und der Weckempfänger 67 aktiv. Die Schaltungsanordnung 59 wird im Ruhezustand ausschließlich über die Spannungsversorgungseinrichtung 63 (Low-Power-Regler 63) versorgt. Der Kondensator C2 wird durch den Low-Power-Regler 63 geladen. Der durch den Komparator comp1 gesteuerte Schalter 69 ist offen, um Stromfluss vom Low-Power-Regler 63 in eine Regelrückführung des externen Spannungsreglers 61 zu vermeiden. C1 ist entladen. Der Mikrocontroller 31 befindet sich vor dem Wecken in einem als STOP-Mode bezeichneten Betriebszustand mit geringer Leistungsaufnahme.

Es ergibt sich folgende Wecksequenz für den Wechsel von dem Ruhezustand in den Betriebszustand:

| *Vorgang* | *Paralleler Vorgang* | *Zeitbedarf* | *Kumulativ e Zeit* |
|---|---|---|---|
| Signal an BP, BM weckt den Flexray-Transceiver 21 | | ca. 20µs | ca. 20µs |
| Mikrocontroller 31 wechselt vom STOP-Mode in einen aktiven Mode | Signal INH (s. Figur 2) aktiviert externen Spannungsregler 61. | ca. 100µs | 0.12ms |
| | C2 versorgt Mikrocontroller 31 | | |
| Mikrocontroller 31 schaltet über Signale STBN, EN die Empfangsschaltung 23 ein. | Spannungsregler 61 startet. | ca. 5µs | 0.125ms |
| | C2 versorgt den Mikrocontroller 31 und Empfangsschaltung 23 | | |
| Datenübertragung beginnt | Spannungsregler 61 startet. | Zeit ist nur für die Dimensionierung von C2 relevant | 0.125ms |
| | C2 versorgt Mikrocontroller 31 und Empfangsschaltung 23 | | |
| Spannung VCC überschreitet die Spannung an VBUF | comp1 schließt den Schalter zwischen VCC und VBUF | | |

Bei bekannten Schaltungsanordnungen ergibt sich dahingegen eine deutlich längere Zeit für den Wechsel von dem Ruhezustand in den Betriebszustand (siehe nachfolgende Tabelle).

Bekannte FlexRay-Transceiver 21 haben einen Empfangsverstärker 67 der von VBAT (Batteriespannung) versorgt wird und nur zum Wecken des Systems dient und eine schnelle Empfangsschaltung 23 (schnellen Eingangsverstärker, engl. Fast Receiver 23) für die Datenübertragung. Die Empfangsschaltung 23 wird aus Genauigkeitsgründen und aus thermischen Gründen aus der 5V-Versorgung (VCC) versorgt.

Um den Stromverbrauch des Systems im Stand-By-Mode so gering wie möglich zu halten, wird die Empfangsschaltung 23 und der (üblicherweise externe) 5V Spannungsregler 61 im Stand By Mode abgeschaltet. Beim Wecken des Systems wird bei bekannten Transceiverschaltungen 21 üblicherweise folgende Sequenz durchlaufen:

| Vorgang | Zeitbedarf | Kumulative Zeit |
|---|---|---|
| Signal an BP, BM weckt den Flexray-Transceiver 21 | ca. 20µs | ca. 20µs |
| INH2 schaltet Spannungsregler 61 ein | ca. 1 ms | 1.02ms |
| Reset (Neustart) des Mikrocontrollers 31, einschließlich Boot-Sequenz | ca. 20ms | 21.02ms |
| Mikrocontroller schaltet die Empfangsschaltung 23 ein | 2µs | 21.022ms |
| Datenübertragung beginnt | | 21.025ms |

## Patentansprüche

1. Schaltungsanordnung (59) für einen Knoten (13) eines Bussystems (11), mit einer Transceiverschaltung (21) und einer mit der Transceiverschaltung (21) verbundenen Steuerschaltung (31), wobei die Transceiverschaltung (21) einen Ruhezustand aufweist, bei dem sie eine im Vergleich zu mindestens einem Betriebszustand verminderte Leistungsaufnahme hat und über eine Spannungsversorgungseinrichtung (63) mit Energie versorgt ist, wobei die Schaltungsanordnung (59) einen steuerbaren Spannungsregler (61) aufweist, der derart mit der Transceiverschaltung (21) gekoppelt ist, dass er im Ruhezustand zum Vermindern der Leistungsaufnahme der Schaltungsanordnung (59) deaktiviert und im Betriebszustand zum Versorgen der Transceiverschaltung (21) und der Steuerschaltung (31) aktiviert ist, **dadurch gekennzeichnet, dass** die Steuerschaltung (31) an die Spannungsversorgungseinrichtung (63) zum Versorgen der Steuerschaltung (31) mit Energie im Ruhezustand angeschlossen ist, dass die Spannungsversorgungseinrichtung (63) in die Transceiverschaltung (21) integriert und an eine Batteriespannung (VBAT) angeschlossen ist, und dass die Schaltungsanordnung (59) ein steuerbares Schaltelement (69) aufweist, das zwischen einem Ausgang (Vout) des Spannungsreglers (61) und einem Ausgang der Spannungsversorgungseinrichtung (63) angeordnet ist und derart mit einem Ansteuerelement (71) zum Ansteuern des Schaltelements (69) gekoppelt ist, dass die beiden Ausgänge mittels des Schaltelements (69) elektrisch voneinander getrennt sind, wenn der Spannungsregler (61) deaktiviert ist.

2. Schaltungsanordnung (59) nach Anspruch 1, **dadurch gekennzeichnet, dass** die Spannungsversorgungseinrichtung (63) als ein Low-Power-Regler ausgebildet ist.

3. Schaltungsanordnung (59) nach Anspruch 1 oder 2, **dadurch gekennzeichnet, dass** die Steuerschaltung (31) derart mit der Transceiverschaltung (21) gekoppelt ist, dass eine Leistungsaufnahme der Steuerschaltung (31) verringert ist, wenn die Transceiverschaltung (21) sich im Ruhezustand befindet.

4. Schaltungsanordnung (59) nach einem der vorhergehenden Ansprüche, **dadurch gekennzeichnet, dass** die Transceiverschaltung (21) zum Anschluss an ein FlexRay-System ausgebildet ist.

5. Schaltungsanordnung (59) nach einem der vorhergehenden Ansprüche, **dadurch gekennzeichnet, dass** es sich bei der Steuerschaltung um einen Mikrocontroller (31) handelt.

6. Schaltungsanordnung (59) nach einem der vorhergehenden Ansprüche, **dadurch gekennzeichnet, dass** das Schaltelement (69) als ein Halbleiterschaltelement, insbesondere als ein Transistor, ausgebildet ist.

7. Schaltungsanordnung (59) nach einem der vorhergehenden Ansprüche, **dadurch gekennzeichnet, dass** die Transceiverschaltung (21) eine mit einer Busleitung (15) des Bussystems (11) gekoppelte Empfangseinrichtung (67) aufweist, die zum Erkennen eines bestimmten Zustands der Busleitung (15), eines Zustandswechsels und/oder einer bestimmten zeitlichen Abfolge von Zuständen und zum Ändern einer Betriebsart der Transceiverschaltung (21) von dem Ruhezustand in den Betriebszustand nach dem Erkennen des Zustands, des Zustandswechsels bzw. der Abfolge von Zuständen eingerichtet ist.

8. Knoten (13) eines Bussystems (11), der eine Schaltungsanordnung (59) mit einer Transceiverschaltung (21) und einer mit der Transceiverschaltung (21) verbundenen Steuerschaltung (31) aufweist, wobei die Transceiverschaltung (21) einen Ruhezustand aufweist, bei dem sie eine im Vergleich zu mindestens einem Betriebszustand verminderte Leistungsaufnahme hat und über eine Spannungsversorgungseinrichtung (63) mit Energie versorgt ist, **dadurch gekennzeichnet, dass** die Schaltungsanordnung (59) nach einem der vorhergehenden Ansprüche ausgebildet ist.

## Claims

1. Circuit arrangement (59) for a node (13) of a bus system (11), having a transceiver circuit (21) and a control circuit (31) connected to the transceiver circuit (21), the transceiver circuit (21) having a quiescent state in which it has a reduced power consumption in comparison with at least one operating state and is supplied with energy via a voltage supply device (63), the circuit arrangement (59) having a controllable voltage regulator (61) which is coupled to the transceiver circuit (21) in such a manner that it is deactivated in the quiescent state in order to reduce the power consumption of the circuit arrangement (59) and is activated in the operating state in order to supply the transceiver circuit (21) and the control circuit (31), **characterized in that** the control circuit (31) is connected to the voltage supply device (63) for the purpose of supplying the control circuit (31) with energy in the quiescent state, **in that** the voltage supply device (63) is integrated in the transceiver circuit (21) and is connected to a battery voltage (VBAT), and **in that** the circuit arrangement (59) has a controllable switching element (69) which is arranged between an output (Vout) of the voltage regulator (61) and an output of the voltage supply device (63) and is coupled to a drive element (71) for driving the switching element (69) in such a manner that the two outputs are electrically disconnected from one another using the switching element (69) when the voltage regulator (61) is deactivated.

2. Circuit arrangement (59) according to Claim 1, **characterized in that** the voltage supply device (63) is in the form of a low-power regulator.

3. Circuit arrangement (59) according to Claim 1 or 2, **characterized in that** the control circuit (31) is coupled to the transceiver circuit (21) in such a manner that a power consumption of the control circuit (31) is reduced when the transceiver circuit (21) is in the quiescent state.

4. Circuit arrangement (59) according to one of the preceding claims, **characterized in that** the transceiver circuit (21) is designed for connection to a FlexRay system.

5. Circuit arrangement (59) according to one of the preceding claims, **characterized in that** the control circuit is a microcontroller (31).

6. Circuit arrangement (59) according to one of the preceding claims, **characterized in that** the switching element (69) is in the form of a semiconductor switching element, in particular a transistor.

7. Circuit arrangement (59) according to one of the preceding claims, **characterized in that** the transceiver circuit (21) has a receiving device (67) which is coupled to a bus line (15) of the bus system (11) and is set up to detect a particular state of the bus line (15), a state change and/or a particular temporal sequence of states and to change an operating mode of the transceiver circuit (21) from the quiescent state to the operating state after the state, the state change or the sequence of states has been detected.

8. Node (13) of a bus system (11), which has a circuit arrangement (59) having a transceiver circuit (21) and a control circuit (31) connected to the transceiver circuit (21), the transceiver circuit (21) having a quiescent state in which it has a reduced power consumption in comparison with at least one operating state and is supplied with energy via a voltage supply device (63), **characterized in that** the circuit arrangement (59) is designed according to one of the preceding claims.

## Revendications

1. Arrangement de circuit (59) pour un noeud (13) d'un système de bus (11), comprenant un circuit émetteur/récepteur (21) et un circuit de commande (31) relié avec le circuit émetteur/récepteur (21), le circuit émetteur/récepteur (21) présentant un état de repos dans lequel il présente une puissance consommée réduite en comparaison avec au moins un état opérationnel et il est alimenté en énergie par le biais d'un dispositif d'alimentation électrique (63), l'arrangement de circuit (59) présentant un régulateur de tension (61) commandable qui est connecté au circuit émetteur/récepteur (21) de telle sorte qu'à l'état de repos, il est désactivé afin de réduire la puissance consommée de l'arrangement de circuit (59) et, qu'à l'état opérationnel, il est activé en vue d'alimenter le circuit émetteur/récepteur (21) et le circuit de commande (31), **caractérisé en ce que** le circuit de commande (31) est raccordé au dispositif d'alimentation électrique (63) en vue d'alimenter le circuit de commande (31) en énergie à l'état de repos, **en ce que** le dispositif d'alimentation électrique (63) est intégré dans le circuit émetteur/récepteur (21) et raccordé à une tension de batterie (VBAT), et **en ce que** l'arrangement de circuit (59) présente un élément de commutation commandable (69) qui est disposé entre une sortie (Vout) du régulateur de tension (61) et une sortie du dispositif d'alimentation électrique (63) et qui est connecté à un élément de commande (71) destiné à commander l'élément de commutation (69) de telle sorte que les deux sorties sont déconnectées électriquement l'une de l'autre à l'aide de l'élément de commutation (69) lorsque le régulateur de tension (61) est désactivé.

2. Arrangement de circuit (59) selon la revendication 1, **caractérisé en ce que** le dispositif d'alimentation électrique (63) est réalisé sous la forme d'un régulateur de basse puissance.

3. Arrangement de circuit (59) selon la revendication 1 ou 2, **caractérisé en ce que** le circuit de commande (31) est connecté avec le circuit émetteur/récepteur (21) de telle sorte qu'une puissance consommée du circuit de commande (31) est réduite lorsque le circuit émetteur/récepteur (21) se trouve à l'état de repos.

4. Arrangement de circuit (59) selon l'une des revendications précédentes, **caractérisé en ce que** le circuit émetteur/récepteur (21) est configuré pour le raccordement à un système FlexRay.

5. Arrangement de circuit (59) selon l'une des revendications précédentes, **caractérisé en ce que** le circuit de commande est un microcontrôleur (31).

6. Arrangement de circuit (59) selon l'une des revendications précédentes, **caractérisé en ce que** l'élément de commutation (69) est réalisé sous la forme d'un élément de commutation semiconducteur, notamment sous la forme d'un transistor.

7. Arrangement de circuit (59) selon l'une des revendications précédentes, **caractérisé en ce que** le circuit émetteur/récepteur (21) présente un dispositif récepteur (67) connecté avec une ligne de bus (15) du système de bus (11), lequel est conçu pour .reconnaître un état donné de la ligne de bus (15), un changement d'état et/ou une séquence chronologique donnée d'états et pour modifier un mode de fonctionnement du circuit émetteur/récepteur (21) de l'état de repos en l'état opérationnel après avoir reconnu l'état, le changement d'état ou la séquence d'états.

8. Noeud (13) d'un système de bus (11), lequel présente un arrangement de circuit (59) comprenant un circuit émetteur/récepteur (21) et un circuit de commande (31) relié avec le circuit émetteur/récepteur (21), le circuit émetteur/récepteur (21) présentant un état de repos dans lequel il présente une puissance consommée réduite en comparaison avec au moins un état opérationnel et il est alimenté en énergie par le biais d'un dispositif d'alimentation électrique (63), **caractérisé en ce que** l'arrangement de circuit (59) est configuré selon l'une des revendications précédentes.
